# EUROPEAN PATENT SPECIFICATION

(11) **EP 2 259 263 B1**
(45) Date of publication and mention of the grant of the patent: **02.01.2013**
(21) Application number: 10164986.1
(22) Date of filing: 04.06.2010
(51) Int. Cl.: G11B 7/22, G11B 7/12, G11B 7/13

(54) **Optical pickup**
Optischer Lesekopf
Capture optique

(30) Priority: 05.06.2009 JP 2009136479
(43) Date of publication of application: 08.12.2010
(73) Proprietor: Funai Electric Co., Ltd., Daito-shi, Osaka 574-0031 (JP)
(72) Inventor: Sugimoto, Yoshikazu, Osaka 574-0013 (JP)
(74) Representative: Beetz & Partner

(56) References cited:
- JP-A- 2004 342 186
- JP-A- 2008 293 546
- US-A1- 2002 172 145
- US-A1- 2003 048 741
- US-A1- 2004 218 516

## Description

### Field of the Invention

The present invention relates to an optical pickup, and in particular, the present invention relates to an optical pickup which has structure in which a plate including a photodetector is fixed on a optical base with adhesive.

### Description of Related Art

An optical pickup is conventionally used for reading information recorded on optical discs such as CD, DVD and the like, and for writing information on the optical discs. The optical pickup is provided with a light source, a photodetector (PD), and an optical system (which is composed of a plurality of optical members) to lead light emitted from the light source to an optical disc and to lead returned light reflected by the optical disc to a photodetector. These components are provided on a slide base (optical base) which also composes the optical pickup.

Conventionally, the photodetector is provided on a circuit board (plate) in rectangle shape in plan view. The plate is adhered and fixed to the slide base, and thereby the photodetector is provided on the slide base.

Among the components that are provided on the slide base in the optical pickup, the photodetector is arranged and fixed on the slide base at a final step in assembly steps for the optical pickup. Therefore, when a final arrangement position of the photodetector is displaced from a target position, it directly affects the performance of the optical pickup. When the final arrangement position of the photodetector is displaced from a target position, the reading performance of the assembled optical pickup may unfortunately be lower than a predetermined performance limit.

Particularly, the arrangement and fixing of the photodetector is performed such that the photodetector is arranged at the target position and then adhered. The displacement of the position of the photodetector may be occurred due to the cure shrinkage of the adhesive, and therefore the performance of the optical pickup may be lower than the performance limit. Therefore, an optical pickup in which the displacement of a photodetector is not occurred due to the cure shrinkage of the adhesive is desired.

Further, even when the positional adjustment of the photodetector is correctly performed in the assembling step, the shrinkage or expansion of adhesive may be generated due to the change of environmental such as temperature and humidity, and the position of the photodetector may be consequently displaced. In consideration of these circumstances, an environmental test is conventionally performed after assembling the optical pickup. When the displacement of a position of a photodetector exceeds a predetermined standard at the environmental test, the optical pickup is evaluated as an inferior good, increasing the production cost of the optical pickup. Therefore, an optical pickup in which the position of a photodetector is not displaced due to the change of the environmental is desired.

Under these circumstances, in the technical field of the optical pickup, the research is conventionally performed about the techniques for preventing the displacement of a position of a photodetector due to the cure shrinkage of the adhesive, or the displacement of a position of the photodetector due to the shrinkage or expansion of adhesive due to the change of the environmental (See, patent documents 1 and 2).

Patent document 1, against which claim 1 is delimited, discloses structure in which adhesive is filled into spaces between edge faces of an outer periphery of a plate-like fixed piece (a plate provided with a photodetector) and jointing faces provided for a fixation base (slide base) while facing the edge faces of the outer periphery and thereby the plate is fixed to the slide base. According to this structure, even if the adhesive shrinks or expands, its influence is prohibited from causing the positional displacement of the photodetector along the focusing direction.

Patent document 2 discloses an optical pickup in which a plate provided with a photo diode (photodetector) is fixed to an optical base (slide base) through layers of adhesive while a small space is kept between the plate and the base. In further detail, circular through holes are formed at plural positions of the plate, and the layers of adhesive are formed such that adhesive filled into the plural through holes protrudes below from the holes, reaches the upper surface of the optical base, and is cured. According to this structure, since force due to cure shrinkage of the adhesive layers at plural fixation positions is balanced, the accuracy of original positioning for the photo diode can be kept after the fixing.
[Patent document 1] JP-A-2008-293546
[Patent document 2] JP-A-2004-318974

The document JP 2004342186 A discloses a method for manufacturing an optical head device with a plurality of light receiving elements, wherein a first light receiving member is fixed in a center, a fixing member is then moved in an intra-plane direction to position the second light receiving element and the fixing member is then rotated around an axis line passing through the second light receiving element to re-adjust the first light receiving element. The fixing member of JP 2004342186 A, which is used as a mounting means for mounting the photodetectors, comprises a circular plate.

### SUMMARY OF THE INVENTION

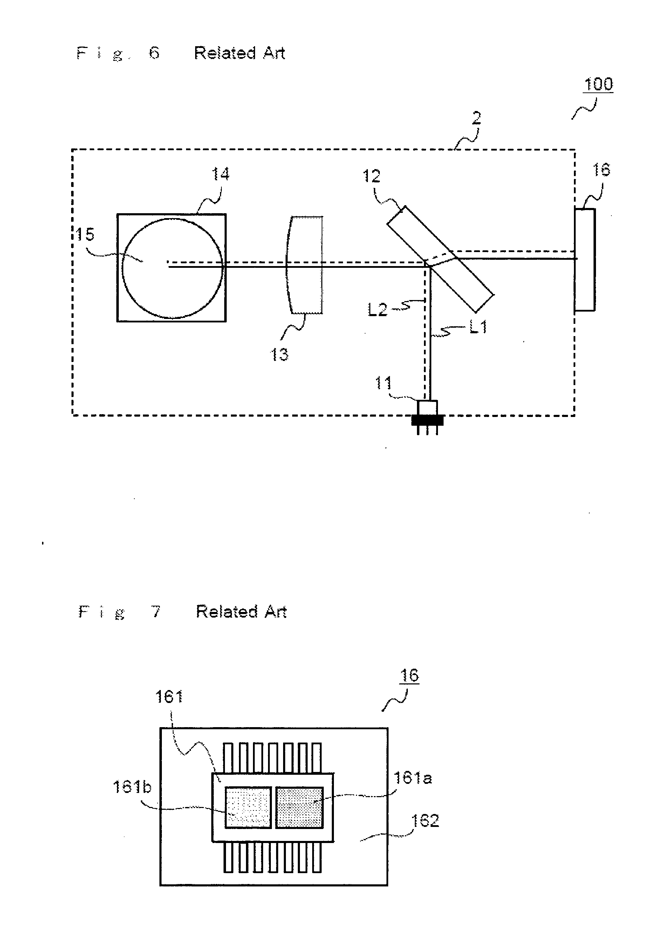

Hereinafter, problems of conventional optical pickup that are newly known in development of the optical pickup will be explained with reference to drawings. Fig. 6 is schematic plan view to show structure of a conventional optical pickup. As shown in Fig. 6, the conventional optical pickup 100 is provided with a light source 11, a beam splitter 12, a collimator lens 13, a raising mirror 14, an objective lens 15 and a photodetecting device 16. These members are loaded on a slide base 2. Since the objective lens 15 is loaded on an objective lens actuator (not shown), it is loaded on the slide base 2 such that it can move in a focusing direction and a tracking direction.

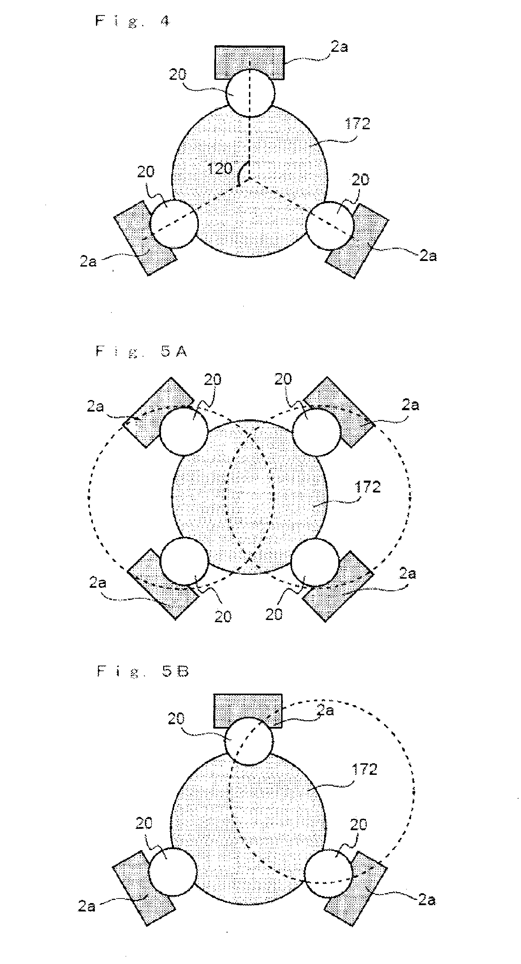

In the optical pickup 100, light emitted from the light source 11 is reflected by the beam splitter 12, and converted into parallel light by the collimator lens 13. Then the parallel light output from the collimator lens 13 is reflected by the raising mirror 14 and focused by the objective lens 15 on recording surface of an optical disc (not shown, arranged in upward of sheet face of Fig. 5). The light focused on the recording surface is reflected and the reflected returned light passes the objective lens 15, raising mirror 14, collimator lens 13 in this order, and arrives at the photodetecting device 16 after it passes through the beam splitter 12. The photodetecting device 16 receives the optical signal and outputs electric signal by photo electric conversion. A reproduced signal and a servo signal are obtained by processing the electric signal output from the photodetecting device 16.

By the way, the optical pickup 100 is compatible to DVD and CD, and the light source 11 can emit both laser light for DVD (wavelength 650 nm) and laser light for CD (wavelength 780 nm) by switching. This kind of light source 11 can be realized by a monolithic laser that has 2 light emission points in 1 chip, or can be realized by a hybrid laser that is formed by integration of 2 laser chips each of which emits laser light having different wave length.

When forming the light source 11 as above described, because the laser light L1 for DVD (shown in solid line) and the laser light L2 for CD (shown in dotted line) both emitted from the light source 11, are emitted from different light emitting points as shown in Fig. 6, focus positions of the laser lights L1 for DVD and the laser light L2 for CD on the photodetecting device 16 are different. Because of this, in the photodetecting device 16, the laser L1 for DVD and the laser L2 for CD are detected in different positions.

Fig. 7 is a schematic plan view to show structure of a photodetecting device which is provided in a conventional optical pickup. As shown in Fig. 7, the photodetecting device 16 provided in the conventional optical pickup 100, includes a photodetector 161 and a PD plate (circuit board) 162 which has a substantially a rectangular shape in plan view and includes the photodetector 161. In the photodetector 161, a DVD photo receiving area 161a to receive laser light L1 for DVD and a CD photo receiving area 161b to receive laser light L2 for CD are formed so as to detect the laser light for DVD and the laser light for CD in different positions.

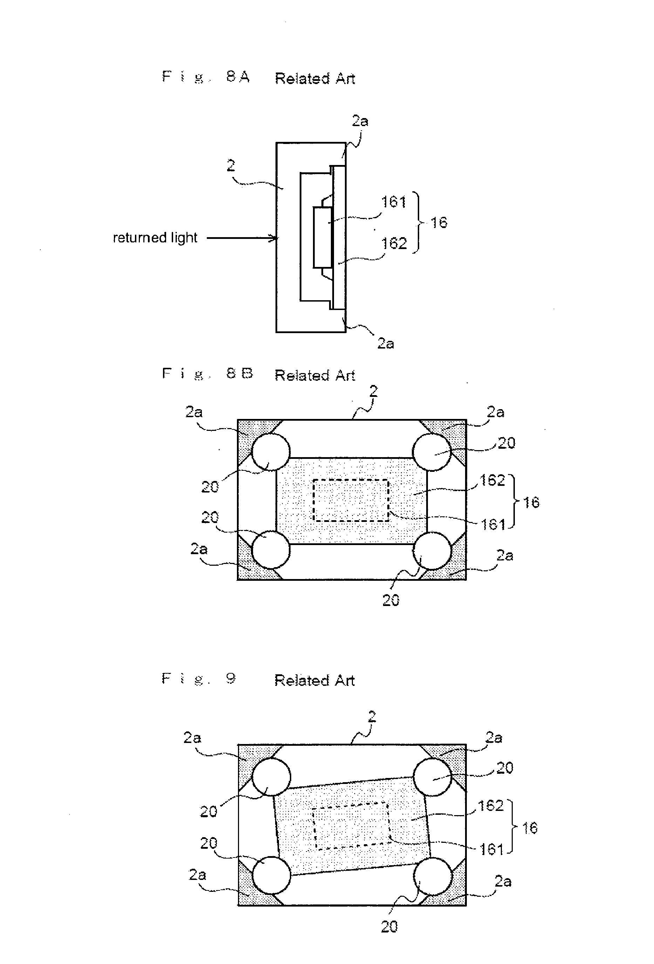

Fig. 8A and Fig. 8B are diagrams to explain structure fixing the photodetecting device onto the slide base in the conventional optical pickup, Fig. 8A is a schematic side view to show the relation between the photodetecting device and the slide base, and Fig. 8B is a schematic front view to show the relation between the photodetecting device and the slide base. In Fig. 8A, a part of the slide base 2 which is provided in the optical pickup 100, is shown. The slide base 2 is provided with a through hole (not shown) such that returned light enters the photodetecting device 16. Further in Fig. 8B, the reason for showing the photodetector 161 in dotted line is that the photodetector 161 is located behind the PD plate 162 and cannot be seen actually.

As shown in Fig. 8A and Fig. 8B, the PD plate 162 which has a substantially rectangular shape in plan view, is arranged and fixed on the slide base 2 with four corners thereof adhered and fixed on the slide base 2. In further detail, by filling adhesive 20 in between the four corners of the PD plate 162 and four bosses 2a (substantially triangular shape in plan view) provided for the slide base 2, the four corners of the PD plate 162 are adhered and fixed to the bosses 2a.

Hereinafter, one example of fixing process of the photodetecting device 16 onto the slide base 2 will be explained. First, the photodetecting device 16 is moved to the vicinity of a fixed position on the slide base 2 while the photodetecting device 16 is held by a jig which is not shown. Then the positional adjustment is performed so that the returned light which is emitted from the light source 11 and reflected by the optical disc is received at appropriate position in the photodetector 161.

In the positional adjustment, because there are two kind of photo receiving areas in the photodetector 161, such as the photo receiving area for DVD 161a and the photo receiving area for CD 161b, firstly, the positional adjustment for one of the areas in three axes of X, Y and Z which are orthogonal with each other, is performed. Next, to perform the positional adjustment for other photo receiving area, a rotating adjustment is performed such that the photodetecting device 16 (PD plate 162) is rotated in the X-Y plane.

The Z direction is a direction that is parallel to a traveling direction of the returned light which is input to the photodetecting device 16. Further, the X-Y plane is a plane that is parallel to both of X axis and the Y axis and vertical to Z axis.

When position of the photodetecting device 16 is decided as above described, a photo curing type adhesive 20 (such as ultra-violet curing adhesive and the like) is filled in a predetermined amount between the PD plate 162 and the bosses 2a by a dispenser, and then, the adhesive is cured by irradiating UV light with using a UV irradiator. After the cure, the jig is removed and the fixing process of the photodetecting device 16 onto the slide base 2 is completed.

When fixing the photodetecting device 16 onto the slide base 2, the rotating adjustment of the PD plate 162 is performed in the optical pickup 100 for adjusting the position of the photodetector 161 as described above. In such case, because only the PD plate 162 is rotated while the bosses 2a are not moved, the relation between the bosses 2a and angles (four angles corresponding to the four corners above described) of the PD plate 162 may not be same for all the angles as shown in Fig. 9.

Therefore, though a dispenser is used to fill the same amount of the adhesive at each of the four angles (four corners), the amount of the adhesive adhering to each of the angles of the PD plate 162 may differ from each other. If the adhesive unequal in the amount adhering to each of the four angles of the PD plate 162 is cured, the unbalance of force applied to the PD plate 162 (photodetecting device 16) may be caused due to the cure shrinkage of the adhesive, and the position of the photodetecting device 16 may be moved. In such a case, the position of the photodetector 161 which is preliminarily adjusted to an appropriate position may be displaced, and the performance of the optical pickup may unfortunately become below a performance limit.

Fig. 9 is a diagram to explain the displacement of position of the photodetector generated in the conventional optical pickup.

From the knowledge of the problem as above described, an optical pickup which has new structure by which displacement of position of the photodetector due to the cure shrinkage of the adhesive can be prevented has been desired. Even if the structure disclosed in the patent document 1 is employed, the nonuniform adhering amount of the adhesive is occurred at four corners of the PD plate as described above, when the rotational adjustment of the PD plate is performed, and therefore displacement of position of the photodetector is occurred. Further according to the structure disclosed in the patent document 2, though the problem which is the unevenness of the adhering amount of the adhesive is suppressed, the joining strength may be insufficient, and further improvement is still required.

Thus, an object of the present invention is to provide an optical pickup in which the photodetector is hardly displaced by the cure shrinkage of the adhesive. Further, another object of the present invention is to provide an optical pickup in which the photodetector is hardly displaced by the environmental change.

To achieve the above described objects, the invention proposes an optical pickup according to claim 1. The optical pickup according to the present invention includes a photo receiving portion to receive returned light reflected by an optical disc; and an optical base to which the photo receiving portion is adhered and fixed, wherein the photo receiving portion has a photodetector and a plate on which the photodetector is loaded, the plate being fixed onto the optical base by adhesive such that the photo receiving portion is adhered and fixed to the optical base, and the plate is in a substantially circular shape in plan view.

According to the present structure, because the plate having the photodetector is in a substantially circular shape in plan view, the relation between an outer periphery of the plate and the adhering portion of the optical base (which is fixed and cannot be moved) can be kept almost the same between before and after rotational adjustment of the plate on X-Y plane (plane substantially vertical to incident direction of the returned light). That is, even when the rotational adjustment of the plate is performed, the amount of the adhesive adhering to the plate is not easily varied, and therefore it is easy to obtain the equal amount of the adhesive at plural adhering portions on the plate. Therefore, even for the optical pickup in which the rotational adjustment of the plate is performed, the balance of the force applied to the plate due to the cure shrinkage of the adhesive is easily kept, and therefore it is easy to prevent the displacement of the position of the photodetector.

Further in the present structure, even in a case where the plate at high temperature expands when the adhesive cures, the difference of degree of the expansion of the plate are hardly occurred among the adhering portions since the plate is in a substantially circular shape in plan view. Therefore, it is easy to prevent the occurrence of the displacement of the position of the photodetector from the target position after the cure shrinkage of the adhesive. Because such effect can be obtained, the optical pickup of the present structure is effective even for an optical pickup in which the rotational adjustment of the plate is not performed when the photodetector is fixed.

Further according to the present structure, because the above described effect can be obtained, it is easy to prevent the displacement of the position of the photodetector due to the shrinkage or expansion of the adhesive due to the environmental change.

As the concrete structure of the optical pickup with the above described structure, it is preferable that a plurality of bosses are formed on the optical base, and the photo receiving portion is adhered and fixed to the optical base through the adhesive between the bosses and the plate.

In the optical pickup with the above described structure, it is preferable that the plate is adhered and fixed to the optical base at four positions. When there is a limit of an irradiating area of UV light by the UV irradiator, this structure can be effective since it prevents the displacement of the position of the photodetector from occurring as much as possible.

In the optical pickup with the above described structure, it is preferable that two kinds of the photo receiving areas to receive different wavelength light respectively are formed on the photodetector. In the optical pickup with such structure, the rotational adjustment of the plate is necessary for the positional adjustment of the photodetector. However, as described above, according to the present structure, the displacement of the position of the photodetector hardly occurs even if the rotational adjustment of the plate is performed, and therefore, the possibility to manufacture inferior goods of the optical pickup is low.

By the optical pickup according to the present invention, the displacement of the position of the photodetector due to the cure shrinkage of the adhesive hardly occurs. Further, by the optical pickup according to the present invention, the displacement of the position of the photodetector due to the environmental change hardly occurs.

### BRIEF DESCRIPTION OF THE DRAWINGS

Fig. 1 is a schematic plan view to show structure of an optical pickup according to one embodiment of the present invention.
Fig. 2 is a schematic plan view to show structure of a photodetecting device provided in the optical pickup according to the present embodiment.
Fig. 3A is a schematic front view to show structure fixing the photodetecting device provided in the optical pickup according to the present embodiment to a slide base.
Fig. 3B is a diagram to show a state where the photodetecting device is rotated in counter clock wise from a state shown in Fig. 3A on X-Y plane.
Fig. 4 is a diagram to explain other embodiment of the optical pickup according to the present invention.
Fig. 5A is a schematic diagram to explain the reason why the number of adhering portions of a PD plate is four in an optical pickup according to the present embodiment, and is a diagram to show structure of the present embodiment.
Fig. 5B is a schematic diagram to explain the reason why the number of adhering portions of a PD plate is four in an optical pickup according to the present embodiment, and is a diagram for comparison with the present invention.
Fig. 6 is a schematic plan view to show structure of a conventional optical pickup.
Fig. 7 is a schematic plan view to show structure of a photodetecting device provided in the conventional optical pickup.
Fig. 8A is a schematic side view to show relation between a photodetecting device and a slide base in a conventional optical pickup.
Fig. 8B is a schematic front view to show the relation between the photodetecting device and the slide base in the conventional optical pickup.
Fig. 9 is a diagram to explain displacement of position of a photodetector occurred in a conventional optical pickup.

### DETAILED DESCRIPTION OF THE PREFERRED EMBODIMENTS

Hereinafter, one embodiment of an optical pickup according to the present invention will be explained in detail with reference to drawings.

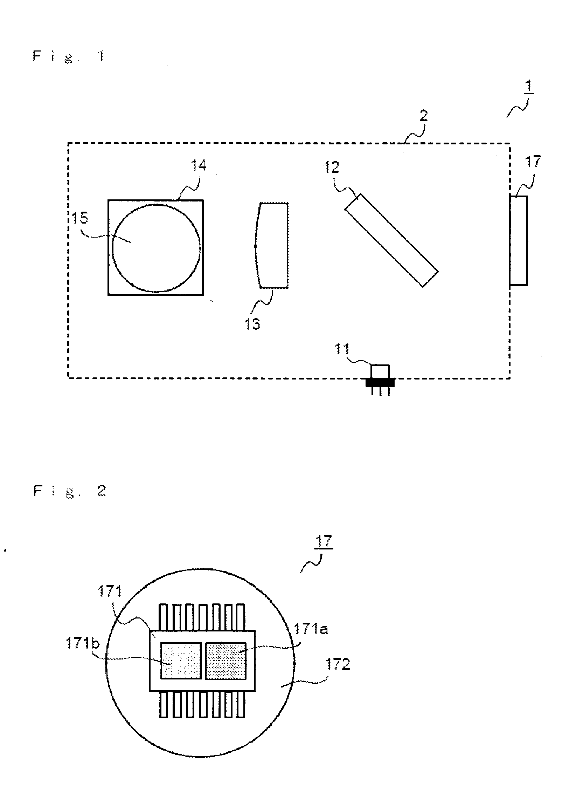

Fig. 1 is a schematic plan view to show structure of an optical pickup according to one embodiment of the present invention. As shown in Fig. 1, an optical pickup 1 according to the present embodiment has almost the same structure as the conventional optical pickup 100 as described above. The optical pickup 1 according to the present embodiment is different from the conventional optical pickup 100 in structure of a photodetecting device 17. Therefore, hereinafter, it will be explained only about the photodetecting device 17 which is the different structure from the conventional optical pickup. Portions which are the same as those in the conventional optical pickup 100 will be given the same reference numerals and explanation about it is omitted if it is not especially required.

Fig. 2 is a schematic plan view to show structure of a photodetecting device provided in the optical pickup according to the present embodiment. The photodetecting device 17 provided in the optical pickup according to the present embodiment includes a photodetector 171 and a PD plate 172. The photodetecting device 17 is one embodiment of a photo receiving portion provided in the optical pickup according to the present invention.

The photodetector 171 has substantially the same structure as the photodetector 161 provided in the conventional optical pickup 100, and includes a DVD photo receiving area 171a for receiving laser light for DVD and a CD photo receiving area 171b for receiving laser light for CD. The PD plate 172 is a circuit board on which the photodetector 171 is loaded and wiring pattern not shown in the drawing is formed on the plate. Further, though not shown in the drawing, the PD plate 172 is connected electrically with a flexible printed circuit board. By this connection, electric signal output from the photodetector 171 is input into a control board (not shown) that controls operation of the optical pickup 1.

The PD plate 172 is in a circular shape in plan view. In this point, the optical pickup according to the present invention is different from the conventional optical pickup 100 in which the PD plate 162 (See, Fig. 7) is in a substantially rectangular shape in plan view. As above described, the photodetector 171 provided in the photodetecting device 17 of the present embodiment has two kinds of the photo receiving areas 171a and 171b. Therefore, even in the optical pickup 1 according to the present embodiment, the rotational adjustment (rotational adjustment on X-Y plane) for adjusting the position of the photodetector 171 is needed for the photodetecting device 17. With regard to this, for the optical pickup 1 according to the present embodiment, because the PD plate 172 is in the substantially circular shape in plan view, it is possible to solve the problem such as the displacement of position of the photodetector due to cure shrinkage of the adhesive (problem of the conventional optical pickup 100) as above described.

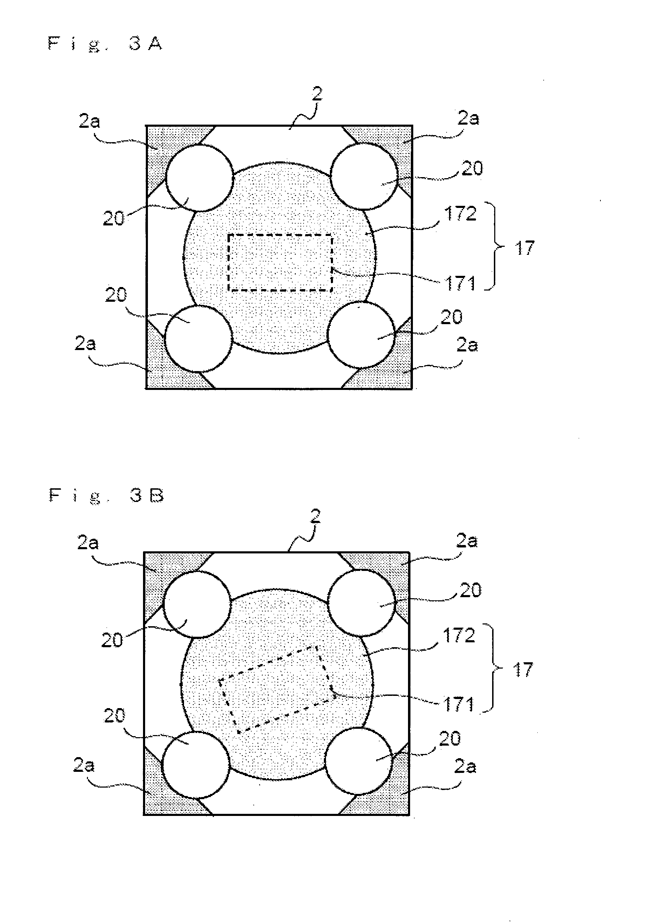

About the reason for this, explanation will be given with reference to Fig. 3A and Fig. 3B. Fig. 3A is a schematic front view to show structure fixing the photodetecting device to a slide base in the optical pickup according to the present embodiment. Fig.3B is a diagram to show a state where the photodetecting device 17 (PD plate 172) is rotated in counter clock wise from a state shown in Fig. 3A on X-Y plane. In Fig. 3A and Fig. 3B, the reason for showing the photodetector 171 by dotted line is that the photodetector 171 is located behind the PD plate 172 and cannot be seen actually.

As shown in Fig. 3A and Fig. 3B, in the optical pickup 1 according to the present embodiment, four bosses 2a which have a substantially triangular shape in plan view are formed on the slide base 2 as similarly as the conventional optical pickup 100. The PD plate 172 which has a substantial circular shape in plan view is fixed on the slide base 2 through the adhesive 20 (UV adhesive in the present embodiment) that is filled between the plate and the four bosses 2a.

In this structure, because the PD plate 172 is in a substantially circular shape in plan view, the positional relation between the outer periphery of the PD plate 172 and the four bosses 2a are hardly changed (as seen from the comparison between Fig. 3A and Fig. 3B), even when the PD plate 172 is rotated in X-Y plane (X-Y plane corresponds to paper face in Fig. 3A and Fig. 3B). Therefore, when a dispenser is used to fill the same amount of adhesive 20 into each of the four adhering portions, it is easy to permit the equal amount of adhesive to adhere to the PD plate 172 at each of the adhering portions even when the rotational adjustment of the PD plate 172 is performed. As a result, the balance of the force applied to the PD plate 172 due to the cure shrinkage of the adhesive is easily maintained, and it is easy to prevent the displacement of position of the photodetector 171.

When a UV irradiator is utilized to irradiate UV light to the UV adhesive 20 to permit the UV adhesive 20 to be cured, the PD plate 172 at high temperature may expand. With regard to this point, in the optical pickup 1 according to the present embodiment, because the PD plate 172 is in a circular shape in plan view, the difference of the degree of expansion of the PD plate 172 hardly occur at the four adhering portions. Also on this point, in the optical pickup 1 according to the present embodiment, it is easy to prevent the occurrence of the displacement of position of the photodetector 171 from the target position after the cure shrinkage of the adhesive.

Further, in the optical pickup 1 according to the present embodiment, it is easy to permit the equal amount of the adhesive 20 to adhere to the PD plate 172 at each of the adhering portions. Therefore, even when the adhesive 20 is shrunk or expanded by the environmental change, the unbalanced force is hardly applied to the PD plate 172, and thus it is easy to prevent the displacement of position of the photodetector 171.

If the PD plate 172 is in a substantially circular shape in plan view as the present embodiment, the number of pieces of the PD plates 172 obtained from a base plate may be decreased in comparison with the PD plate in a substantially rectangular shape. However, by constructing the PD plate 172 as the present embodiment, it is possible to prevent the occurrence of inferior goods of optical pickups at final stage of the assembling process, and therefore the production cost of the optical pickup is expected to be reduced.

In the above described embodiment, the photodetecting device 17 is adhered and fixed to the slide base 2 at four portions. Further, in the present embodiment, the four portions are provided at about 90 degree intervals with reference to the center of the substantially circular shaped PD plate 172. However, it is not intended that the adhering portions where the photodetecting device 17 is adhered and fixed onto the slide base 2 are limited to the structure of the present embodiment. If the balance of the force to be applied to the photodetecting device 17 due to the cure shrinkage of the adhesive is kept (making the resultant force almost zero) so as to suppress the displacement of position of the photodetector 171, other structures may be utilized.

For example, as shown in Fig. 4, the portions for adhering the PD plate 172 may be provided at three portions at about 120 degree intervals with reference to the center of the substantially circular shaped PD plate 172. Fig. 4 is a diagram to explain other embodiment of the optical pickup according to the present invention. However, in the present embodiment, the number of the adhering portions is four as more preferable structure. Hereinafter, the reason for this structure will be explained with reference to Fig. 5A and Fig. 5B.

Fig. 5A and Fig. 5B are schematic diagrams to explain the reason why the number of the adhering portions of the PD plate 172 is four in the optical pickup of the present embodiment. Fig. 5A shows the structure according to the present embodiment and it shows a case where the number of adhering portions of the PD plate 172 is four. Fig. 5B is a diagram for comparison with the present embodiment and it shows a case where the number of the adhering portions of the PD plate is three.

As above described, in the optical pickup 1 according to the present embodiment, the PD plate 172 is adhered and fixed onto the slide base 2 by the UV adhesive. In this case, it is necessary to irradiate UV light at the adhering portions with utilizing the UV irradiator, however, an area where the UV light can be irradiated by the UV irradiator is limited. A circle shown in dotted line in Fig. 5A and Fig. 5B shows the maximum area where the UV light can be irradiated.

As shown in Fig. 5A and Fig. 5B, in the case where the number of the adhering portions of the PD plate 172 is three (in case of Fig. 5B), the distance between the neighboring adhering portions becomes longer than that in the case where the number of the adhering portions of the PD plate 172 is four (in case of Fig. 5A). Therefore, one UV irradiator cannot irradiate two adhering portions at a time (two adhering portions cannot be included within one dotted line circle). As a result, in case of Fig. 5b, it is necessary to install the UV irradiator at three positions. On the other hand, in case of the present embodiment (in case of Fig. 5A), because one UV irradiator can irradiate two adhering portions at a time (two adhering portions can be included within one dotted line circle), only two UV irradiators are required.

When the UV adhesive is cured, for keeping the balance of the force due to the cure of the UV adhesive at each of the adhering portions, it is desired that the irradiating conditions of the UV light (irradiating time, irradiating amount of light and the like) are made the same at each of the adhering portions. With regard to this, when a plurality of the UV irradiators are used, the fluctuation of the irradiating conditions is easily occurred. Therefore, it is desirable that the number of the UV irradiators used for the cure of the UV adhesive is reduced as small as possible. In consideration of above, in the present embodiment, the number of adhering portions of the PD plate 172 is four for avoiding the adverse influence due to the increase of the number of the UV irradiators.

In more detail, if the number of the adhering portions of the PD plate 172 is increased, the PD plate 172 is easily subjected to the unbalanced force due to the cure shrinkage of the adhesive. Therefore, in consideration of this point and the prevention of the above adverse influence due to the increase of the number of the irradiators, in the present embodiment, the number of the adhering portions of the PD plate 172 is four. However, if one UV irradiator can irradiate three adhering portions at a time, it is desirable that the number of the adhering portions is three.

Further, in the present embodiment, the light source 11 is two wavelengths laser and the photodetector 171 has two kinds of photo receiving areas. However, it is also effective to apply the present invention to an optical pickup in which the photo receiving area included in the photodetector is only one, and the optical pickup with such structure is also included in the scope of the present invention. In case where the PD plate is in the substantially circular shape, it is easy to obtain the equal degree of expansion of the PD plate due to irradiation of the UV light as above described. Therefore, it is easy to prevent the PD plate from being subjected to the unbalanced force due to the cure shrinkage of the adhesive, and it is easy to prevent occurrence of the displacement of position of the photodetector from the target position.

Further, in the present embodiment, though the optical pickup is used for DVD and CD. Needless to say, the optical pickup according to the present invention is not limited to be used for DVD and CD but used for other kinds of optical discs.

The present invention can be applied effectively to an optical pickup having structure in which a base plate provided with a photodetector is fixed onto an optical base with curable adhesive, and the present invention is industrially applicable.

The above embodiments of the invention as well as the appended claims and figures show multiple characterizing features of the invention in specific combinations. The skilled person will easily be able to consider further combinations or sub-combinations of these features in order to adapt the invention, which is defined in the claims, to his specific needs.

## Claims

1. An optical pickup comprising:
a photo receiving portion (17) to receive returned light reflected by an optical disc; and
an optical base (2) on which a plurality of bosses (2a) are formed and to which the photo receiving portion (17) is adhered and fixed, wherein
the photo receiving portion (17) has a photodetector (171) and a plate (172) on which the photodetector (171) is loaded, , and
the photo receiving portion (17) is adhered and fixed to the optical base (2) with adhesive interposed between the bosses (2a) and the plate (172), and
the adhesive is of curable type
**characterized in that** the plate (172) is in a substantially circular shape in plan view,
and
the bosses (2a) are located symmetrically so that a force applied to the photo receiving portion is balanced.

2. The optical pickup according to Claim 1, wherein
the plate (172) is adhered and fixed to the optical base (2) at four positions.

3. The optical pickup according to any one of claims 1 - 2, wherein on the photodetector (171), two kinds of photo receiving areas (171 a, 171 b) to receive light with different wavelength are formed respectively.

## Patentansprüche

1. Optischer Lesekopf mit:
einem Fotoempfangsabschnitt (17) zum Empfangen von zurückgesandtem Licht, das von einer optischen Platte reflektiert wird; und
einer optischen Basis (2), auf der mehrere Ansätze (2a) ausgebildet sind und an der der Fotoempfangsabschnitt (17) angeklebt und befestigt ist, wobei
der Fotoempfangsabschnitt (17) einen Fotodetektor (171) und eine Platte (172) aufweist, auf welche der Fotodetektor (171) geladen ist, und
der Fotoempfangsabschnitt (17) an der optischen Basis (2) angeklebt und befestigt ist, wobei Klebemittel zwischen die Ansätze (2a) und die Platte (172) gefügt ist, und
das Klebemittel vom härtbaren Typ ist,
**dadurch gekennzeichnet, dass**
die Platte (172) in Draufsicht in einer im Wesentlichen kreisrunden Form ist, und
die Ansätze (2a) symmetrisch positioniert sind, so dass eine auf den Fotoempfangsabschnitt ausgeübte Kraft ausgeglichen ist.

2. Optischer Lesekopf nach Anspruch 1, wobei:
die Platte (172) an vier Positionen an der optischen Basis (2) angeklebt und befestigt ist.

3. Optischer Lesekopf nach irgendeinem der Ansprüche 1 bis 2, wobei auf dem Fotodetektor (171) jeweils zwei Arten von Fotoempfangsbereichen (171a, 171b) zum Empfangen von Licht mit unterschiedlicher Wellenlänge ausgebildet sind.

## Revendications

1. Dispositif de capture optique comprenant :
une partie photoréceptrice (17) permettant de recevoir la lumière renvoyée réfléchie par un disque optique ; et
une base optique (2) sur laquelle une pluralité de bosses (2a) sont formées et à laquelle la partie photoréceptrice (17) est collée et fixée,
la partie photoréceptrice (17) possédant un photodétecteur (171) et une plaque (172) sur laquelle le photodétecteur (171) est chargé, et
la partie photoréceptrice (17) étant collée et fixée à la base optique (2) à l'aide d'un adhésif interposé entre les bosses (2a) et la plaque (172), et l'adhésif étant du type durcissable, et
**caractérisé en ce que** la plaque (172) présente une forme sensiblement circulaire dans une vue en plan,
les bosses (2a) sont agencées de manière symétrique de telle sorte qu'une force appliquée à la partie photoréceptrice soit équilibrée.

2. Le dispositif de capture optique selon la revendication 1, dans lequel
la plaque (172) est collée et est fixée à la base optique (2) à quatre emplacements.

3. Le dispositif de capture optique selon l'une quelconque des revendications 1 à 2, dans lequel deux types de zones photoréceptrices (171a, 171b) permettant de recevoir la lumière avec une longueur d'onde différente sont formées respectivement sur le photodétecteur (171).
